Europäisches Patentamt

European Patent Office

Office européen des brevets

(19)

(11) **EP 0 548 958 B1**

(12) **EUROPEAN PATENT SPECIFICATION**

(45) Date of publication and mention
of the grant of the patent:
**08.03.2000 Bulletin 2000/10**

(51) Int. Cl.[7]: **G06K 7/10**

(21) Application number: **92121913.5**

(22) Date of filing: **23.12.1992**

(54) **Laser scanner device**

Laserstrahlabtaster

Appareil de balayage à laser

(84) Designated Contracting States:
**AT DE ES FR GB IT**

(30) Priority: **23.12.1991 US 812605**
**23.12.1991 US 812539**

(43) Date of publication of application:
**30.06.1993 Bulletin 1993/26**

(73) Proprietor:
**SYMBOL TECHNOLOGIES, INC.**
**Bohemia New York 11716-3300 (US)**

(72) Inventors:
• **Li, Yajun**
**Oakdale, New York 11769 (US)**
• **Katz, Joseph**
**Stony Brook, New York 11790 (US)**

• **Dvorkis, Paul**
**Stony Brook, New York 11970 (US)**
• **Marwin, Gregg**
**Douglaston, NY 11362 (US)**

(74) Representative:
**Wagner, Karl H., Dipl.-Ing. et al**
**WAGNER & GEYER**
**Patentanwälte**
**Gewürzmühlstrasse 5**
**80538 München (DE)**

(56) References cited:
**EP-A- 0 323 848**      **EP-A- 0 414 466**
**EP-A- 0 460 669**      **US-A- 4 101 072**
**US-A- 4 920 255**

**Description**

The invention relates to laser light sources for laser scanning heads of the type used to read symbols such as bar codes where different portions of the symbol have different reflectivity.

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, the bars and spaces having different light reflecting characteristics. The readers and scanning systems electro-optically transform the graphic indicia into electrical signals, which are decoded into alphanumerical characters that are intended to be descriptive of the article or some characteristic thereof. Such characters are typically represented in digital ford and utilized as an input to a data processing system for applications in point-of-sale processing, inventory control, and the like. Scanning systems of this general type have been disclosed, for example, in U.S. Patent Nos. 4,251,798; 4,369,361; 4,387,297; 4,409,470; 4,760,248; and 4,896,026, all of which have been assigned to the sane assignee as the instant application.

As disclosed in some of the above patents, one embodiment of such a scanning system resides, inter alia, in a hand-held, portable laser scanning head supported by a user, which is configured to allow the user to aim the head, and more particularly, the light beam, at a target and a symbol to be read.

The light source in a laser scanner is typically a gas laser or semiconductor laser. The use of a semiconductor devices such as a laser diode as the light source in scanning systems is especially desirable because of their small size, low cost and low power requirements. The laser beam is optically modified, typically by a condenser lens, to form a waist-shaped beam in which the width of the beam diminishes with distance until reaching a minimum, or waist, and then increases. The beam is focused so that a desired spot size is achieved at the target distance, typically so that the waist is located at the target distance. It is preferred that the spot size at the target distance be approximately the same as the minimum width between regions of different light reflectivity, i.e., the bars and spaces of the symbol.

Bar code symbols are formed from bars or elements that are typically rectangular in shape with a variety of possible widths. The specific arrangement of elements defines the character represented according to a set of rules and definitions specified by the code or "symbology" used. The relative size of the bars and spaces is determined by the type of coding used, as is the actual size of the bars and spaces. The number of characters per inch represented by the bar code symbol is referred to as the density of the symbol. To encode a desired sequence of characters, groups of elements are concatenated together to form the complete bar code symbol, with each character of the message being represented by its own corresponding group of elements. In some symbologies a unique "start" and "stop" character is used to indicate where the bar code begins and ends. A number of different bar code symbologies exist. These symbologies include, e.g., UPC/EAN, Code 39, Code 128, Codabar, and Interleaved 2 of 5, etc.

In order to increase the amount of data that can be represented or stored on a given amount of surface area, several new bar code symbologies have recently been developed. One of these new code standards, Code 49, introduces a "two-dimensional" concept by stacking rows of characters vertically instead of extending the bars horizontally. That is, there are several rows of bar and space patterns, instead of only one row. The structure of Code 49 is described in U.S. Patent No. 4,794,239.

In the scanning systems known in the art, the light beam is directed by a lens or similar optical components along a light path toward a target that includes a bar code symbol on the surface. The scanning functions by repetitively scanning the light beam in a line or series of lines across the symbol. The scanning component may either sweep the beam spot across the symbol and trace a scan line across and past the symbol, or scan the field of view of the scanner, or do both. Scanning systems also include a sensor or photodetector which functions to detect light reflected from the symbol. The photo-detector is therefore positioned in the scanner or in an optical path in which it has a field of view which extends across and slightly past the symbol. A portion of the reflected light which is reflected off the symbol is detected and converted into an electrical signal, and electronic circuitry or software decodes the electrical signal into a digital representation of the data represented by the symbol that has been scanned. For example, the analog electrical signal from the photodetector may typically be converted into a pulse width modulated digital signal, with the widths corresponding to the physical widths of the bars and spaces. Such a signal is then decoded according to the specific symbology into a binary representation of the data encoded in the symbol, and to the alphanumeric characters so represented.

The decoding process in known scanning systems usually work in the following way. The decoder receives the pulse width modulated digital signal from the scanner, and an algorithm implemented in software attempts to decode the scan. If the start and stop characters and the characters between them in the scan were decoded successfully and completely, the decoding process terminates and an indicator of a successful read (such as a green light and/or an audible beep) is provided to the user. Otherwise, the decoder receives the next scan, performs another decode attempt on that scan, and so on, until a completely decoded scan is achieved or no more scans are available.

Such a signal is then decoded according to the specific symbology into a binary representation of the data encoded in the symbol, and to the alphanumeric characters so represented.

Bar code symbols are printed in varying densities. High density symbols (line widths ≤ 0.127 mm (5 mil)) are, for example, used for small parts (e.g., integrated circuits) and for symbols with high information density. Low density symbols (line widths ≤ 1.27 mm (50 mil)) are, for example, used for coding packages (e.g., UPC/EAN symbols) and containers in warehouses. As it is generally preferred that the beam scanned across the bar code symbol have a width comparable to that of the minimum width between regions of different light reflectivity (e.g., the minimum width of a bar element), different beam widths are needed to read different density bar codes. Furthermore, bar codes of the same density can be located at varying distances from the laser scanning head, and thus there is a need to vary the beam spot size at each of many different ranges from the scanning head.

Conventional laser scanners have a condenser lens that focuses the laser diode so that the spot size is correct at the range at which the bar code reader is expected to operate. With such fixed focus systems, there is typically a "dead zone" in front of the scanner in which the spot size is too large for scanning to occur. Also, such scanners must be focused at the factory by adjusting the condenser lens along the optical axis while observing the spot size and then permanently setting the position of the lens at the position that achieves the desired size. This step is a relatively costly one, adding to the cost of manufacturing the laser scanner.

Various proposals have been made for improvements over these fixed focus scanners. A prior filed U.S. patent application of Bergstein, U.S.S.N. 07/503,374, discloses an afocal optical system in which the laser beam is collimated so that its width (or spot size) remains approximately constant over a wide range (i.e., so as to reduce as much as possible the waist shape of the beam). Krichever et al. U.S. Patent No. 4,808,804 shows moving different condenser lens elements into and out of the optical path of the laser beam, and moving the laser diode along the optical axis, to vary the working distance and/or the spot size of the beam. Gabeler U.S. Patent No. 4,920,255 shows a bar code reading system in which the range of the surface bearing the bar code is detected using an ultrasonic ranging system, and the detected range is used to prescribe the setting of the optics focusing a laser bean on the bar code (the output signal from the ultrasonic ranging system drives a stepper motor in the laser focusing optics). Drucker U.S. Patent No. 4,831,275 discloses a variety of means for optically modifying the light reflected from the bar code symbol, to vary the distance at which the symbol is in focus on the photodetector within a bar code reader; the techniques taught include altering the shape of a lens, moving an aperture in the optical path, moving a mirror (or a fiber optic cable), and providing an array of sensors, each effectively focused at a different range. U.S. Patent No. 4,333,006 discloses the use of a plurality of varying focal length holograms generated by a rotating disk to focus at differing overlapping distance ranges.

In general the invention features in accordance with one aspect a laser scanning head in which the range of the beam waist is varied independently of any measurement of the actual range of the symbol. In preferred embodiments, the optical member is a condenser lens that is moved by energizing a magnetic coil; the lens is operated independently of the scanning movement of the laser beam, to produce a continuous, progressive variation (e.g., a continuous oscillation) in the range of the beam waist, so that at some point in the variation the spot size on the symbol will be of an appropriate size. In other preferred embodiments, the movement of the lens is synchronized with the beam scan (e.g., so that the same spot size can be maintained for several scans).

In still other preferred embodiments, spot size is chosen adaptively, by varying the range of the beam waist until the contrast in the reflected light collected from the symbol exceeds a predetermined level. This technique has substantial advantages over other approaches, e.g., it shortens the time required to decode, produces more accurate decoding, and reduces the amount of movement of the optical members (and thus the wear on the mechanism and energy consumed as a consequence of the movement). The adaptive approach takes advantage of the way in which bar code scanners are often used; the same scanner may be used for different ranges, and even for different densities, but it will typically be used repeatedly at the same range and same density for an extended period of time. By adaptively selecting the range of the beam waist, the range can be set and held for an extended period, with perhaps only small and infrequent adjustments. Thus, decoding occurs more rapidly (as the time wasted when the range is cycled through inappropriate values is eliminated) and more accurately (as the spot size on the beam can be adjusted more gradually, and does not even have to be moved most of the time).

The invention takes advantage of the variation in beam width to provide all range, all density scanning. Rather than trying to reduce or eliminate the waist shape of the laser beam, as done in afocal systems, the invention uses the waist shape to advantage. At any given symbol range, the waist location is moved to ranges beyond or in front of the symbol in order to enlarge the spot size at the symbol. Thus, at any of a wide variation of symbol ranges, a wide variation in spot size can be achieved. This allows the same laser scanning head to be used successfully in many different applications.

A further advantage of the invention is that it can greatly reduce the "dead zone" in front of a scanner.

A still further advantage is that factory adjustment of focus can be avoided altogether, and thus the invention can be of benefit even where the scanner is intended for one range and one density, for it reduces the manufacturing cost of even these simpler scanning heads.

The invention avoids the complexity and cost of using a separate range finding sensor to determine target range and then prescribe changes in focus. The synchronous mode of the invention, in which the beam range (i.e., the range of the beam waist) is moved from one range to another, and held at a fixed range at each step for a predetermined number of scan cycles, is particularly useful for bar code scanners with high scanning rates.

In accordance with another aspect the present invention relates to laser scanning systems for reading and decoding bar code symbols. Particularly, it relates to an object sensing circuit that (i) detects when an object has been introduced into the scan field of the laser scanner and (ii) automatically converts the laser scanning system from a sleep or object sensing mode of operation to a continuous or scan mode of operation when an object has been detected.

Various optical readers and optical scanning systems have been developed heretofore for reading bar code symbols appearing on a label or on the surface of an article. The bar code symbol itself is a coded pattern of indicia comprised of a series of bars of various widths spaced apart from one another to bound spaces of various widths, the bars and spaces having different light reflecting characteristics. The readers and scanning systems electro-optically transform the graphic indicia into electrical signals, which are decoded into alphanumerical characters that are intended to be descriptive of the article or some characteristic thereof. Such characters are typically represented in digital form and utilized as an input to a data processing system for applications in point-of-sale processing, inventory control, and the like. Scanning systems of this general type have been disclosed, for example, in U.S. Patent Nos. 4,251,798, 4,369,361, 4,387,297, 4,409,470, 4,760,248, and 4,896,026, all of which have been assigned to the same assignee as the instant application.

Bar code symbols are formed from bars or elements that are typically rectangular in shape with a variety of possible widths. The specific arrangement of elements defines the character represented according to a set of rules and definitions specified by the code or "symbology" used. The relative size of the bars and spaces is determined by the type of coding used, as is the actual size of the bars and spaces The number of characters per inch represented by the bar code symbol is referred to as the density of the symbol. To encode a desired sequence of characters, a collection of element arrangements are concatenated together to form the complete bar code symbol, with each character of the message being represented by its own corresponding group of elements. In some symbologies a unique "start" and "stop" character is used to indicate where the bar code begins and ends. A number of different bar code symbologies exist. These symbologies include UPC/EAN, Code 39, Code 128, PDF417 Codabar, and Interleaved 2 of 5.

For the purpose of our discussion, characters recognized and defined by a symbology shall be referred to as legitimate characters, while characters not recognized and defined by that symbology are referred to as illegitimate characters. Thus, an arrangement of elements not decodable by a given symbology corresponds to an illegitimate character(s) for that symbology.

In order to increase the amount of data that can be represented or stored on a given amount of surface area, several new bar code symbologies have recently been developed. One of these new code standards, Code 49, introduces a "two-dimensional" concept by stacking rows of characters vertically instead of extending the bars horizontally. That is, there are several rows of bar and space patterns, instead of only one row. The structure of Code 49 is described in U.S. Patent No. 4,794,239.

A one-dimensional single-line scan, as ordinarily provided by hand-held readers, has disadvantages in reading these two dimensional bar codes; that is, the reader must be aimed at each row, individually. Likewise, the multiple-scan-line readers produce a number of scan lines at an angle to one another so these are not suitable for recognizing a Code 49 type of two-dimensional symbols.

In the scanning systems known in the art, the light beams are directed by a lens or similar optical components along a light path toward a target that includes a bar code symbol on the surface. The scanner functions by repetitively scanning the light beam in a line or series of lines across the symbol. The scanning component may either sweep the beam spot across the symbol and trace a scan line across and past the symbol, or scan the field of view of the scanner, or do both.

Scanning systems also include a sensor or photodetector which functions to detect light reflected from the symbol. The photodetector is therefore positioned in the scanner or in an optical path in which it has a field of view which extends across and slightly past the symbol. A portion of the reflected light which is reflected off the symbol is detected and converted into an electrical signal, and electronic circuitry or software decodes the electrical signal into a digital representation of the data represented by the symbol that has been scanned. For example, the analog electrical signal from the photodetector may typically be converted into a pulse width modulated digital signal, with the widths corresponding to the physical widths of the bars and spaces.

Such a signal is then decoded according to the specific symbology into a binary representation of the data encoded in the symbol, and to the alphanumeric characters so represented.

Laser scanners are not the only type of optical instrument capable of reading bar code symbols. Another type of bar code reader is one which incorporates detectors based upon charge coupled device (CCD) technology. In such readers size of the detector is larger than or substantially the same as the symbol to be read. The entire symbol is flooded with light from the reader, and each CCD cell is sequentially read out to determine the presence of a bar or a space. Such readers are lightweight and easy to use, but require substantially direct contact or placement of the reader on the symbol to enable the symbol to properly read. Such physical contact of the reader with the symbol is a preferred mode of operation for some applications, or as a matter of personal preference by the user.

There presently exists various types of fixed mount omnidirectional laser scanners for bar code reading applications. These scanners typically use one or more motor/mirror assemblies to generate a scan pattern. The light source used to scan bar codes is usually a semiconductor visible laser diode. For a typical omnidirectional laser scanner, the scan pattern is designed such that the bar code may be scanned in any orientation in a plane with respect to the scan pattern. This obviates the need for the user of the scanner to carefully align the bar code symbol with respect to the scan pattern as one would have to do for single lane laser scanners, whether fixed mount or hand held.

Fixed mount omnidirectional scanners are often operated in a continuous ON mode. In this mode, items having bar codes may be rapidly scanned with no need for the user to carefully align the bar code symbol nor to initiate the scanning process by turning on the scanner in any way. A key disadvantage of continuous mode operation is that the key internal components of the laser scanner, such as the visible laser diode and the scan motor, have limited operational lifetimes and their degradation is accelerated by continuous operation. For instance, the reflective facets which define the laser cavity tend to degrade in reflectivity over time resulting in the gradual reduction of effective laser output power. Also, the various motors used as scanning elements all comprise mechanical parts having finite lifetimes. Other factors that may degrade motor lifetime are high speeds, unbalanced motor shaft loads, and high temperatures associated with constant on or high duty-cycle operation.

Because of the limited lifetime associated with the key elements of the laser scanner, it is undesirable to have the scanner remain on during extended periods of non-use. Thus, to extend the overall scanner lifetime, the scanner may be shut down if it is not used for a predetermined length of time. The shutting down process may be implemented in hardware or software. In prior art laser scanners, this shutting off process may have required the user to manually restart the scanner, possibly by toggling an external switch on the scanner or controller. This is not desirable because time is wasted during the power-up process and especially because that process is not transparent to the user.

In view of the above-mentioned disadvantages associated with an omni-directional laser scanner having only a continuous ON and OFF mode of operation, a system that provides a way for the laser scanner to operate in a dormant state or "sleep" mode of operation, when not in use, would be highly desirable. Such a sleep mode would permit the laser scanner components such as the visible laser diode to remain OFF, and the motor(s) to operate at a fraction of the nominal scanning speed, thus helping to reduce overall power consumption and significantly extend the lifetimes of these components. Furthermore, a system that can rapidly convert from a sleep mode to a continuous ON mode of operation in a way that is virtually transparent to the user would also be advantageous. It is accordingly an object of the present invention to fulfill these needs by providing an object sensing system that automatically converts the laser scanner from a sleep mode to a continuous mode of operation when an object is introduced in the scanning field. Such an object sensing system provides circuitry that detects when an object is placed in the scanning field, such as when a user attempts to read a bar-coded item. Once detected, the object sensing system automatically "wakes up" to scan and decode the symbol. Thus the present invention enables the user of bar code scanners to conserve the useful lifetime of the critical scanner components including the laser diode and scan motors without sacrificing the ease of use or scanner throughput.

The present invention is also directed to an object sensing system that provides object sensor circuitry for detecting when any object is introduced into the scanning field of a fixed mount bar code laser scanning device. This circuitry operates to detect a change in the received signal level of the reflected light from a pulsed illumination source that operates when the laser scanning system is in the sleep mode of operation. When in the sleep mode, the object sensor circuitry generates a steady state voltage signal from the reflected light of the pulsed illumination source. Derived from the steady state voltage signal are two threshold voltage signals; a positive threshold signal having a magnitude a predetermined percentage greater than that of the steady state signal and a negative threshold signal having a magnitude a predetermined percentage less than that of the steady state signal. When an object is placed in the scan field, the steady state voltage signal level may either increase or decrease depending upon the distance, spatial orientation, and relative contrast between the object and the background surface. The object sensor circuitry continuously monitors and compares the steady state voltage signal with the positive and negative threshold voltage signals. When the steady-state voltage signal increases above or decreases below the positive or negative threshold voltage signal respectively, the object sensor circuitry generates a trigger signal that is received by the laser scanning system's microprocessor. Upon receipt of the trigger signal, the microprocessor directs the laser scanning system to operate in its continuous scanning mode, i.e., the laser scanning diode operates at full power and the scan motors operate at their full speed. Thus, from the viewpoint of the user, the laser scanner is again ready to scan, read, and decode the bar code symbol of the particular object in a negligible amount of time.

From EP-A-0 424 097 and EP-A-0 460 669, an apparatus and method as set forth in the preamble of claims 1 and 9, respectively, is known.

The present invention is characterized in that said first light beam is pulsed at a first predetermined frequency in a first mode of operation and operated continuously in a second mode of operation.

Other features and advantages of the invention will be apparent from the following description of preferred embodiments, and from the claims.

BRIEF DESCRIPTION OF THE DRAWINGS

FIG. 1 is cross-sectional view through a laser scanning head incorporating the laser light source of the invention.

FIG. 2 is a cross-sectional view taken on line 2-2 of FIG. 1, showing the location of the laser zooming system and adjoining photodetector.

FIG. 3A is an elevation view taken on line 3-3 of FIG. 2, showing one embodiment of the laser light source of the invention.

FIG. 3B is a partial elevation view taken on line 3-3 of FIG. 2, showing an alternative aperture.

FIG. 4 is a cross-sectional view taken on line 4-4 of FIG. 3A.

FIG. 5 is a cross-sectional view taken on line 5-5 of FIG. 3A.

FIG. 6 is an elevation view taken on line 3-3 of FIG. 2, showing another embodiment of the laser light source of the invention.

FIG. 7 is a cross-sectional view taken on line 7-7 of FIG. 6A.

FIG. 8 is a cross-sectional view taken on line 8-8 of FIG. 6A.

FIG. 9 is a cross-sectional view through a further embodiment of the laser light source of the invention.

FIG. 10 is an elevation view taken on line 3-3 of FIG. 2, showing another embodiment of the laser light source of the invention.

FIG. 11 is a cross-sectional view taken on line 11-11 of FIG. 10.

FIG. 12 is a combined optical schematic and electrical block diagram of one embodiment of the invention.

FIG. 13 is a graphical presentation of the variation in laser spot size for one embodiment of the invention.

FIG. 14 is a graphical presentation of the variation in laser spot size for another embodiment of the invention.

FIG. 15 is a combined optical schematic and electrical block diagram of one embodiment of the invention.

FIG. 16 is a graphical presentation of the variation in laser spot size for a another embodiment of the invention.

FIG. 17 is a diagrammatic representation (not to scale) of the waist shape of the laser beam at different ranges of the laser beam, i.e., at different positions of the condenser lens.

FIGS. 18 and 19 are graphical presentations of the relationship between the condenser lens position and the range of the laser beam.

FIG. 20 is a longitudinal sectional view through another embodiment of a laser scanning head incorporating the laser light source of the invention.

FIG. 21 is a longitudinal sectional view through another embodiment of the laser light source of the invention.

Fig. 22 is a block diagram of a laser scanner system that incorporates the present invention.

Fig. 23 shows the laser spot tracing a rosette pattern, the moving optical field of view about the laser spot, and the stationary AIM spot used as an illumination source for the object sensor system.

Fig. 24 is a block diagram of the operational modes of the laser scanning system illustrated in Fig. 22.

Fig. 25 is a block diagram of the object sensor circuit.

Fig. 26 is a schematic diagram of the object sensor circuit.

Fig. 27(a) and (b) show typical object sensor detection waveforms with Fig. 27(a) illustrating the voltage signal produced when the object placed in the scanning field has greater reflectivity than the background level and Fig. 27b) illustrating the voltage signal produced when the object has reflectivity less than that of the background level.

Fig. 28 illustrates typical waveforms of the received signal representing reflecting light and the steady state background signal after peak detection.

Fig. 29 illustrates the typical positive and negative threshold voltage waveforms during and after transition from scanning mode to sleep mode.

DETAILED DESCRIPTION OF PREFERRED FIRST EMBODIMENTS

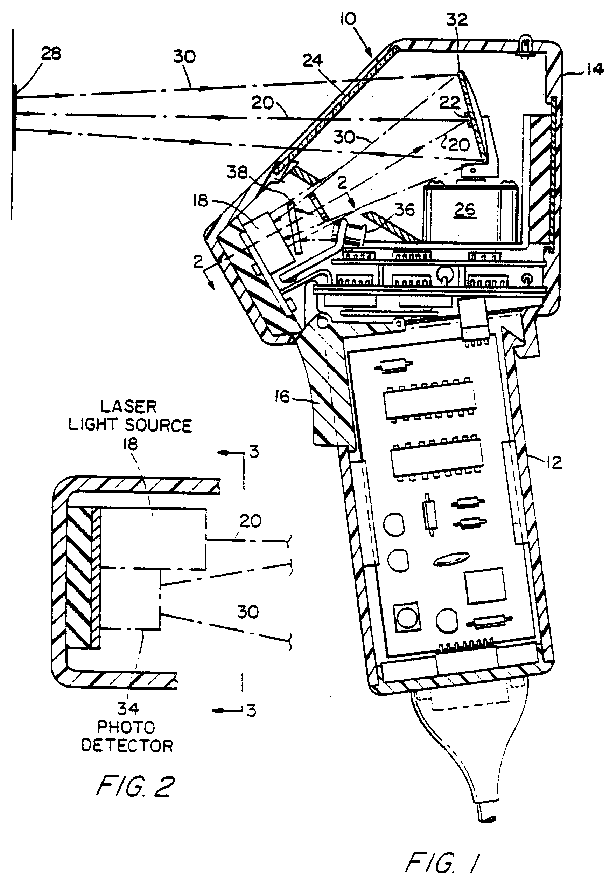

Shown in FIG. 1 is a hand-held laser scanning head 10 of the type more fully described, for example, in U.S. Patent No. 4,897,532. Other types of laser scanning heads can be used with the invention. Laser scanning heads are useful for reading symbols composed of portions having different light reflective properties. Such symbols include black and white industrial symbols, e.g., Code 2=39, Codabar, Interleaved 2 of 5, etc., and also the omnipresent UPC bar code symbol. The symbols may also be any alphabetic and/or numeric characters. Included are symbols located in a background field, wherein the symbols, or at least a portion thereof, have a different light reflective property than that for the background field. Reading such symbols is of particular benefit in the fields of robotics and object recognition.

Turning to FIGS. 1-2, the head 10 includes a generally gun-shaped housing having a handle portion 12 and body portion 14. A manually-actuated trigger 16 activates the scanner, causing laser light source 18 to emit a laser beam along optical axis 20. The beam is reflected by scanning mirror 22, emerges from the scanning head through window 24, and strikes symbol 28 (the range of the symbol in front of the scanning head is not shown to scale in the drawing). The scanning mirror 22 is mounted on a high-speed scanner motor 26, which reciprocally and repetitively oscillates the mirror to cause the laser beam to scan back and forth across the indicia 28. Light reflected from the symbols is collected by generally concave, spherical collecting mirror 32, which defines a cone 30 of reflected light. (Mirror 22, which reflects the laser beam, is a small flat mirror positioned along one side of concave collecting mirror 32.) The cone 30 of reflected light is directed by mirror 32 to photodetector 34 (preferably a photodiode), which generates an electrical analog signal indicative of the detected variable light intensity. Mirror 32 may also serve to focus and direct an aiming beam of light along the same axis as the laser beam. The aiming beam is generated by light source 36 (e.g., a visible light emitting diode (LED), an incandescent white light source, or a xenon flash tube), and reflected toward concave mirror 32 by a cold mirror 38, which is transmissive at the wavelengths of the laser beam, but reflective at the wavelengths of the aiming beam.

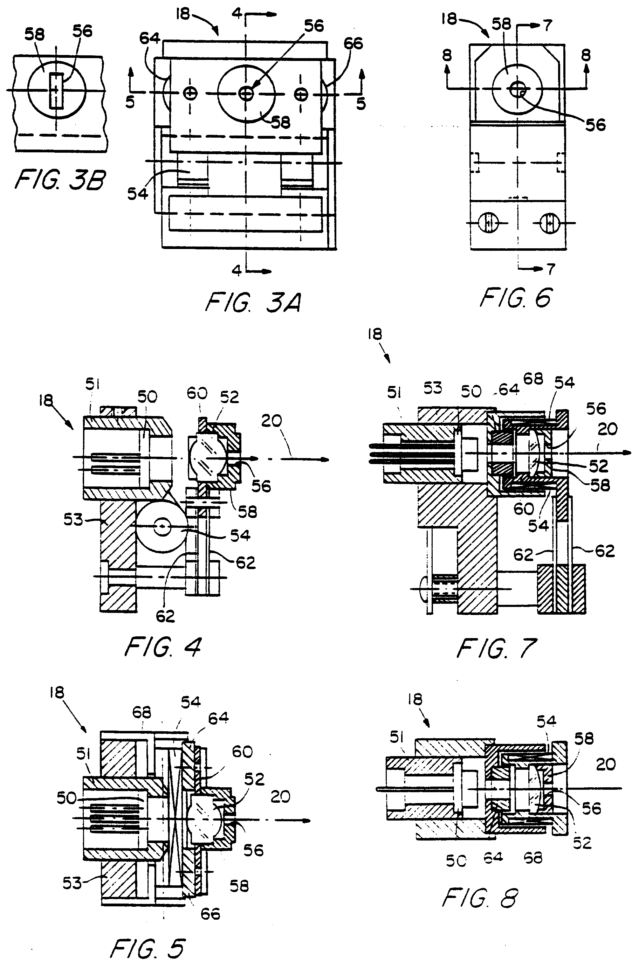

Turning to FIGS. 3A, 3B, 4, and 5, there is shown one preferred embodiment of the laser light source. Laser diode 50 is supported in laser holder 51, which is secured to base 53. The laser diode emits a laser beam along optical axis 20. The beam is focused by condenser lens 52, which is moved longitudinally along the optical axis by activation of magnetic coil 54. Light emerging from lens 52 passes through aperture 56, which may, e.g., be a circular opening (FIG. 3A) or a rectangular slit (FIG. 3B). Lens 52 is supported in support member 60. Aperture 56 is formed in aperture member 58, which fits over the lens. The lens support member 60 is supported on a pair of leaf springs 62, so that it can oscillate longitudinally along the optical axis. Two permanent magnets 64, 66 and soft-iron portions 68 are also supported by the leaf springs. Movement of the condenser lens is achieved by varying the strength of the field generated by the magnetic coil 54.

Another preferred embodiment of the laser light source 18 is shown in FIGS. 6-8. Laser diode 50 is supported in holder 51, which is secured in base 53. The laser beam emitted by the diode passes along optical axis 20 through condenser lens 52 and aperture 56, which may be a circular opening (FIG. 6A) or a rectangular slit (not shown, but similar to FIG. 3B). The aperture is formed in aperture member 58, which fits over the lens. Movement of the condenser lens is achieved in this embodiment by mounting the magnetic coil 54 on the lens support member 60, so that the coil moves with the lens. The lens support member 60 is supported on a pair of leaf springs 62. The permanent magnet 64, which has a hole through its center for passing the laser beam, and associated soft iron member 68 are fixed in place relative to the laser diode. As the amplitude of the alternating current to the coil is increased, the coil is drawn toward the permanent magnet 64, and further within surrounding soft-iron member 68. Placing the magnetic coil on the moving member, and the heavier permanent magnet and soft-iron member on the fixed member, lightens the mass that must be moved, and thus improves the high frequency response of the lens movement. Also shown in FIG. 7 is the photodetector 34, fastened to base 53.

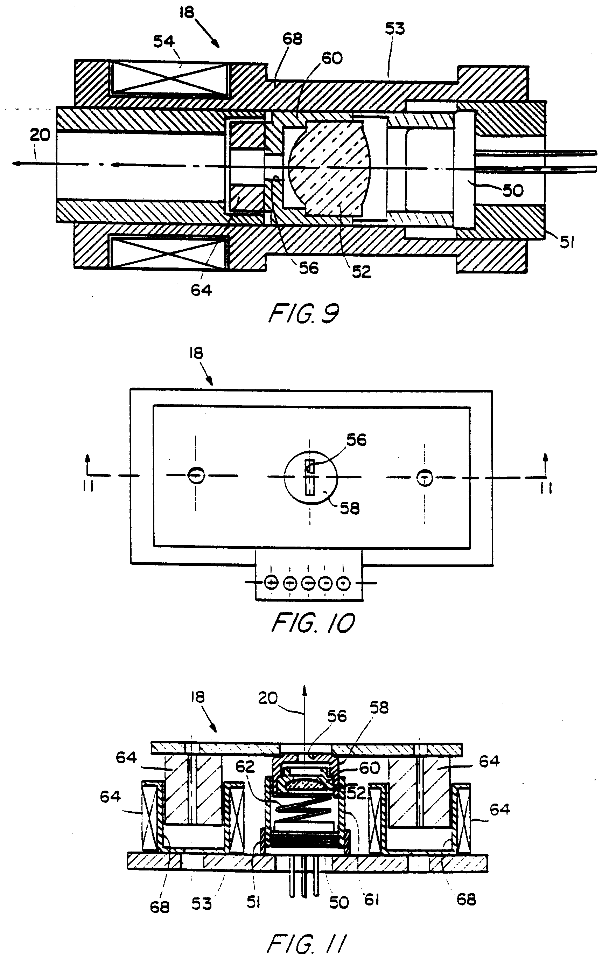

A third preferred embodiment of the laser light source is shown in FIG. 9. In this embodiment, the magnetic coil and soft-iron member 68 are fixed to base 53, and the permanent magnet 64 is mounted with the movable lens. The laser beam emitted by the laser diode 50, supported in laser holder 51, passes through condenser lens 52, aperture 56, and an opening in the permanent magnet 64. The lens 52, lens support member 60, and permanent magnet 64 move toward the magnetic coil 54 when the field strength of the coil is increased.

A fourth preferred embodiment of the laser light source is shown in FIGS. 10-11. Laser diode 50 is secured to base 53. Condenser lens 52 is supported in lens support member 60, over which fits aperture member 58 with aperture 56. The lens support and aperture members ride within tubular housing 61. Helical spring 62 resists movement of the lens and lens support member toward the laser diode. Two permanent magnets 64 move with the lens assembly. The magnets are received within soft-iron jackets 68 surrounded by magnetic coils 64. Increasing the amplitude of the current supplied to the magnetic coils 64 causes the permanent magnets 64 to be drawn toward the magnetic coils, thus shortening the separation between the condenser lens and the laser diode.

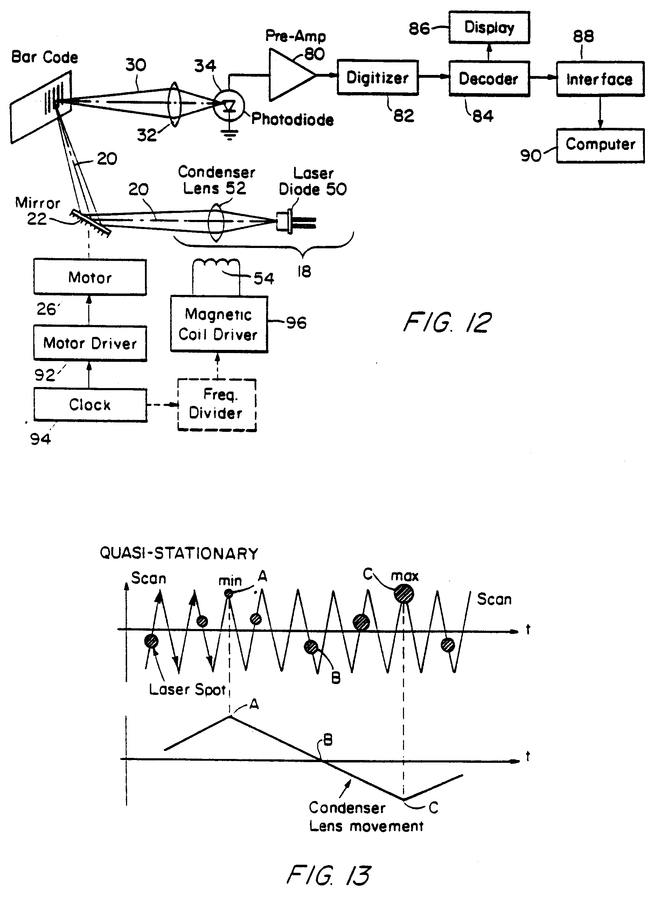

Anyone of the four described laser light sources can be used with one of three preferred lens control systems. The first lens control system is shown in FIG. 12. The basic optical path is shown diagrammatically in the figure. The laser beam emitted by laser diode 50 is focused by condenser lens 52, and scanned across the bar code symbols by oscillating mirror 22. Light reflected from the bar code is collected by focusing mirror 32 (shown as a lens) and focused onto photodiode 34. The output of the photodiode is processed in a manner well known in the art. The signal is amplified by pre-amp 80 to produce an analog signal representative of the variation in reflectivity of the scanned bar code. The analog signal is then digitized by digitizer 82, and the digital signal is decoded by decoder 84 to provide the string of characters represented by the bar code. The decoded characters can be displayed on display 86 and/or supplied through an interface 88 to a digital computer 90.

The electronic circuitry controlling the laser light source and scanning mirror are also shown in Fig. 12. Mirror 22 is oscillated by motor 26 under control of motor driver 92 and clock 94. The position of condenser lens 52 is continuously oscillated by condenser lens driver 96, driving magnetic coil.

FIG. 13 shows graphically the variation in laser beam focusing that is achieved by oscillating the condenser lens. The movement of the condenser lens is represented by the lower graph; the movement is shown as piecewise linear, but it could, as well, be sinusoidal or another shape. The upper graph shows the scanning movement of the laser beam, and superimposed on the curve is the "spot size" of the laser beam at a few points in time. For clarity only a few "spot size" representations are shown. For example, at time A, the condenser lens is at one extreme end of its travel corresponding to the smallest spot size. At time B, the lens has travelled to a point corresponding to an intermediate spot size. At time C, the lens has reached its opposite extreme, corresponding to a maximum spot size. Thus, in the time required to complete ten scans across the bar code indicia, the spot size has been varied from a minimum to a maximum. This embodiment is referred to as quasi-stationary movement of the lens, as the movement is quite slow relative to the scan rate.

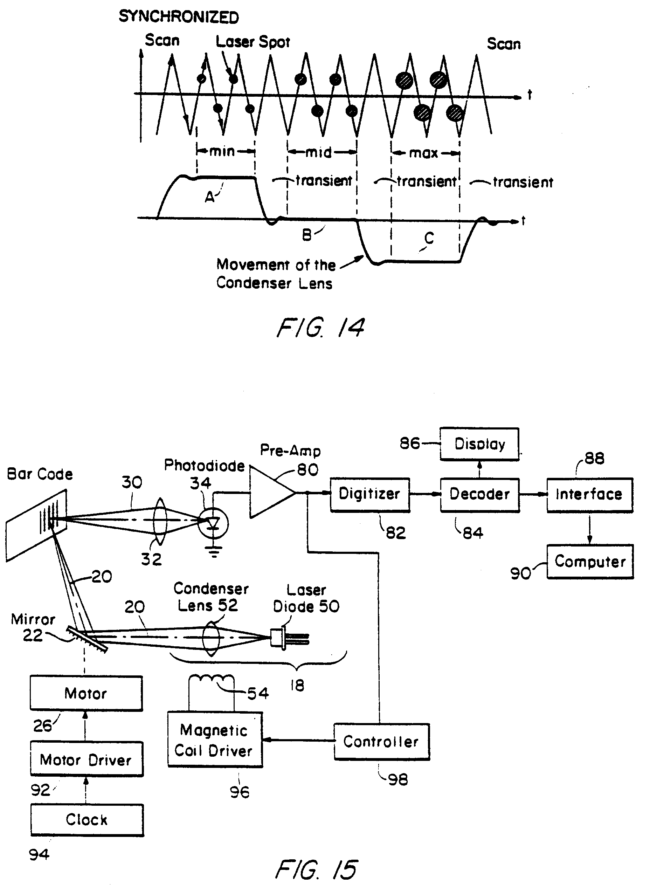

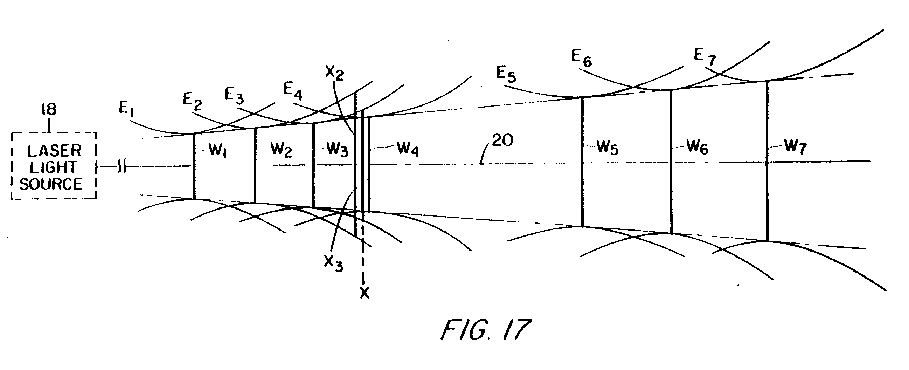

A second preferred lens control system is also shown in FIG. 12. A frequency divider or similar circuit, under control of the same clock that drives the beam scanning mirror, governs the movement of the condenser lens. As shown in FIG. 14, the lens is moved between three different positions in this embodiment. The lens remains in position A, at which the laser spot size is a minimum, for four scans across the bar code indicia. Then, the lens is moved to position B, which corresponds to a mid-sized laser spot, and it is again held in that position for four scans across the indicia. Next, the lens is moved to position C, which corresponds to a maximum-sized laser spot, and it is held there for a further four scans across the indicia. Finally, the lens is moved back to position A, to begin the cycle all over again.

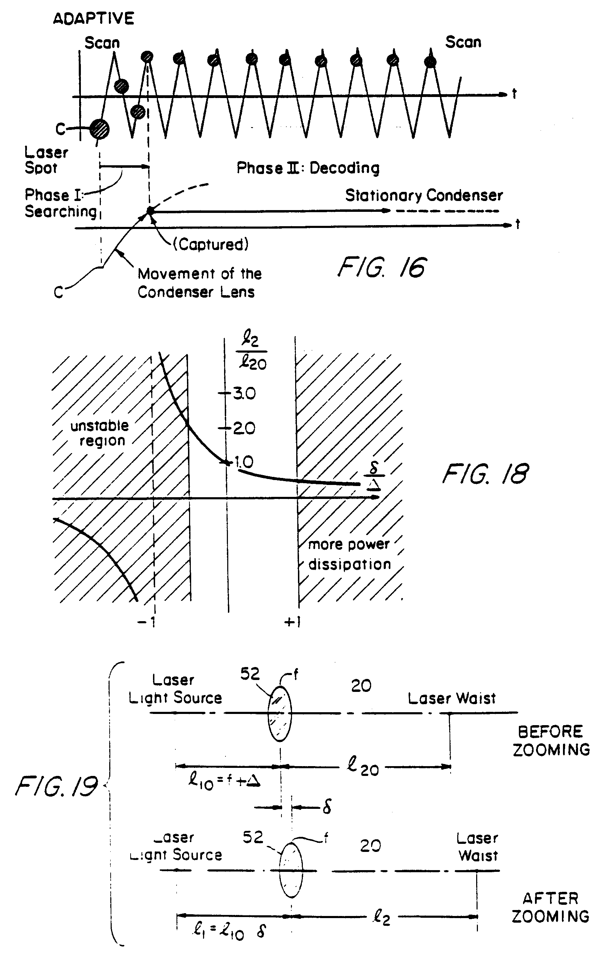

The third, and most preferred, embodiment of the lens control system is shown in FIG. 16. This is an adaptive system, in which the position of the condenser lens is set in response to feedback from the photodiode. When the trigger on the laser scanner is activated, the lens begins at a position C, which corresponds to the maximum spot size. During what is known as Phase I, the lens is slowly moved, with a corresponding reduction in the spot size, until the output of pre-amp 80 signals controller 98 that the spot size has reached a dimension sufficient to produce the desired degree of variation in reflected light. At that point, which is called "capture", controller 98 freezes the condenser lens position for the duration of the scan (Phase II). Alternatively, if the output of pre-amp 80 falls off, and "capture" is lost, the controller can be designed to begin a further search for an acceptable position for the condenser lens.

Capture occurs when there is sufficient contrast in the analog signal. Contrast, C, can be expressed as

$$C = \frac{I_{MAX} - I_{MIN}}{I_{MAX} + I_{MIN}}$$

in which $I_{MAX}$ is the value of the analog signal at a peak, which corresponds to the light reflected from a light-colored (e.g., white) region of the indicia, and $I_{MIN}$ is the value of the analog signal at a minimum, which corresponds to the light reflected from a dark-colored (e.g., black) region of the indicia. Capture occurs when the contrast, C, exceeds a predetermined limit

$$C \geq C_0$$

where $C_0$ is a constant. The value of $C_0$ used will depend on the performance of the digitizer that converts the analog signal into a digital signal. The better the performance of the digitizer the smaller can be the value of $C_0$.

We have spoken so far of the "spot size" of the laser beam. Turning to Fig. 17, the meaning of "spot size" can be explained. The laser beam produced by laser diode 50 and condenser lens 52 is not perfectly collimated. The width of the beam varies along the optical axis. Thus, for example, when the condenser lens is at one extreme end of its travel the corresponding laser beam would have the envelope marked $E_1$ (not drawn to scale) in FIG. 17. The width of the beam varies, but is a minimum at the "waist", location $W_1$. As the condenser lens translates toward the other end of its travel, the waist of the laser beam moves further away from the light source. Several of the envelopes defining the laser beam at various stations of the condenser lens are shown, e.g., envelopes $E_2$ - $E_7$. What is important to note is that the size of the waist of the laser beam grows steadily larger as the location of the waist moves away from the light source. Thus, $W_2$ is larger than $W_1$, and so on, with $W_7$ being the waist dimension when the condenser lens has reached the other end of its travel.

The variation in beam width at any given condenser lens location advantageously makes it possible to produce a variation in "spot size" at the same range. Thus, e.g., if the bar code symbol being scanned was located at position X, the spot size could be varied to accommodate a variety of bar code densities. The minimum spot size would be achieved with the condenser lens in a position corresponding to beam envelope $E_4$, thus producing a waist $W_4$. Larger spot sizes can be achieved by moving the condenser lens away from the $E_4$ position, e.g., to positions corresponding to envelopes $E_3$ and $E_2$, at which the spot size is $X_3$ and $X_2$, respectively. The same variation in spot size can be provided at other ranges. Thus, the natural shape of the laser beam generated by a laser diode is used to advantage, to provide variation in spot size at varying ranges.

FIGS. 18-19 show the relationship between condenser lens position and the range of the laser beam (i.e., the position of the beam waist). The situation before zooming is shown in the top half of FIG. 19. The distance of the beam waist from the lens, $l_{20}$, can be expressed as a function of the focal length, f, and location of the light source (i.e., the laser diode), $l_{10}$, which equals f+Δ. Thus, before zooming, we have

$$l_{20} = \frac{f(f+\Delta)}{f+\Delta-f} \cong \frac{f^2}{\Delta}$$

After zooming, the lens has moved by an amount δ, to shift the location of the beam waist to $l_2$, which can be expressed as

$$l_2 = \frac{f(l_{10}+\delta)}{l_{10}+\delta-f} = \frac{f(f+\Delta+\delta)}{\Delta+\delta}$$
$$\cong \frac{f^2}{\Delta+\delta} = \frac{l_{20}}{1+(\delta/\Delta)}.$$

Therefore

$$\frac{l_2}{l_{20}} \cong \frac{1}{1+(\delta/\Delta)} .$$

The practically applicable region for (δ/Δ) is

$$-0.5\Delta \leq \delta \leq \Delta.$$

If δ is outside this range, operation may become unstable or produce undesirably high power dissipation (FIG. 18). The corresponding variation in image distance, i.e., beam waist range, is

$$l_2 = (0.5 - 2.0)l_{20}$$

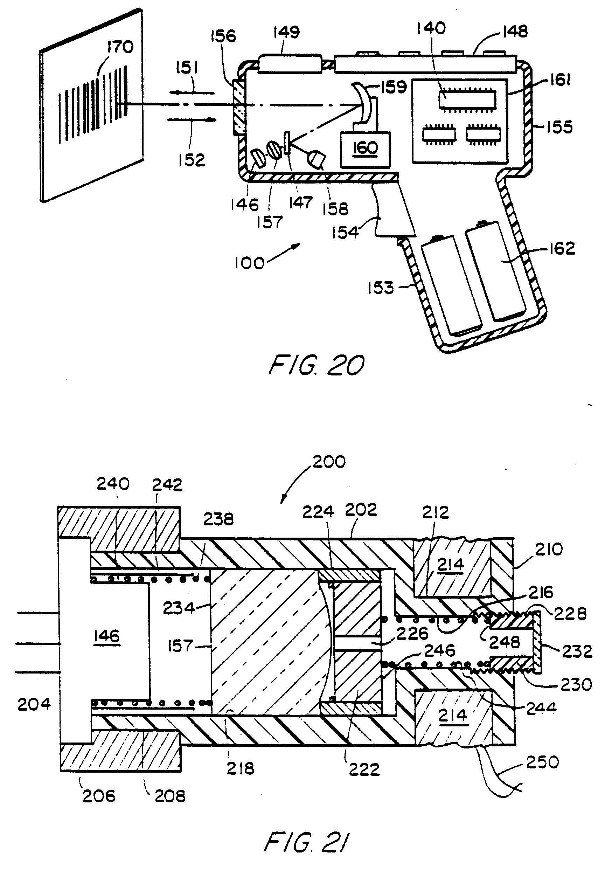

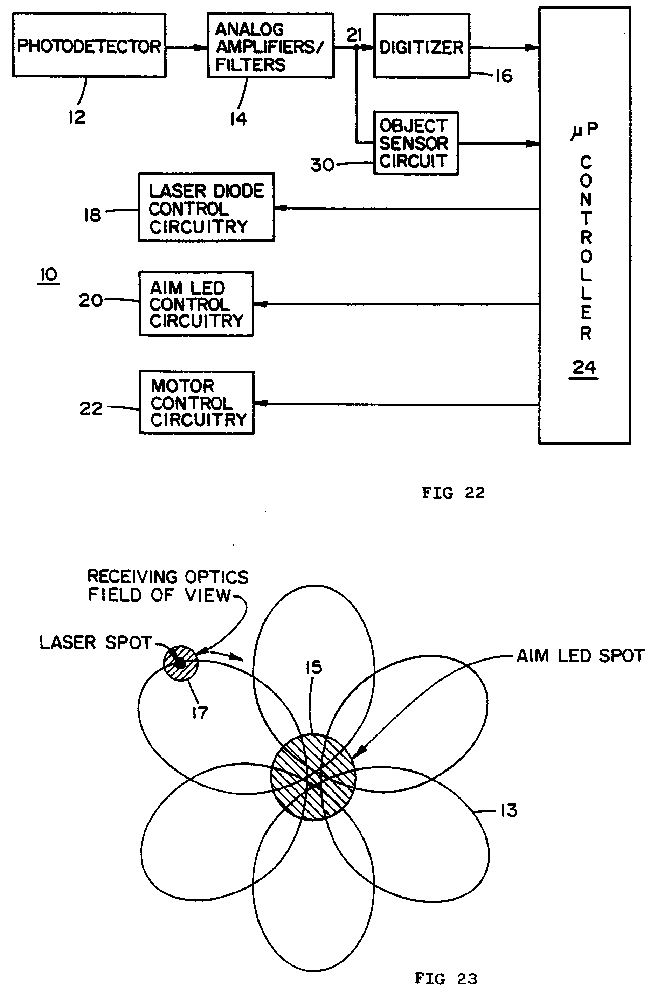

Another embodiment of the invention is shown in FIGS. 20 and 21. A laser scanning device may be a bar code reader unit 100 in a hand-held gun-shaped configuration, although obviously other kinds of configurations of scanners readily lend themselves to the invention, having a pistol-grip type of handle 153 and in which a movable trigger 154 is employed to allow the user to activate the light beam 151 and detector circuitry when pointed at the symbol to be read, thereby saving battery life if the unit is self-powered. A lightweight plastic housing 155 contains the laser light source, the detector 158, the optics and signal processing circuitry, and the CPU 140 as well as power source or battery 162. A light-transmissive window 156 in the front end of the housing 155 allows the outgoing light beam 151 to exit and the incoming reflected light 152 to enter. The reader 100 is designed to be aimed at a bar code symbol by the user from a position in which the reader 100 is spaced from the symbol, i.e., not touching the symbol or moving across the symbol. Typically, this type of hand-held bar code reader is specified to operate in the range of from contact with the symbol to distances of perhaps several inches or even further therefrom.

As further depicted in FIG. 20, a suitable lens 157 (or multiple lens system) may be used to focus the scanned beam into the bar code symbol at an appropriate reference plane. A light source 146, such as a semiconductor laser diode, is positioned to introduce a light beam into the axis of the lens 157, and the beam passes through a partially-silvered mirror 147 and other lenses or beam-shaping structure as needed, along with an oscillating mirror or scanning element 159 which is attached to a scanning motor 160 activated when the trigger 154 is pulled. An alternative optical arrangement is depicted in U.S. Patent No. 5,015,833. If the light produced by the source 146 is not visible, an aiming light, if needed, produces a visible-light spot which may be fixed, or scanned just like the laser beam; the user employs this visible light to aim the reader unit at the symbol before pulling the trigger 154.

In order to be able to utilize the scanning device to incorporate the zoom/autofocus capability; in essence, to be able to scan and read indicia on a target at various scanning ranges from the device, the reader 100 includes an inventive electromagnetic zoom arrangement for the optical system or lens 157, as shown in FIG. 20, so as to be able to shift the focus, i.e., the waist location, for a light beam or laser beam which is projected from the light source 146.

In order to accomplish the foregoing, as is particularly illustrated in FIG. 21, the electromagnetic autofocus/zoom arrangement provides for a housing structure 200 including a tubular body portion 202 which is preferably constituted from a non-metallic or plastic metal, such as teflon or the like, with an internal substantially cylindrical configuration. Fastened to one end of the tubular body portion 202 is the light source 146 for projecting a beam of light; for example, such as a laser diode connected to a suitable source of electrical energy; for instance, the battery 162, by means of wires 204. The light source or laser diode 146 is mounted in a sleeve 206, which may be brass, in either a screwthreaded engagement or in a close locking fit on the one end 208 of tubular housing body portion 202.

The opposite or second end 210 of the housing body portion 202 may have an annular recess 212 formed therein adapted to receive electrically-energizable wound coils 214 which are connected to a source for alternating-current electrical energy This annular recess 212 forms an internal diameter 216 at the second end 210 of the tubular body portion 202 which is of a smaller diameter then the internal cylindrical diameter 218 of the body portion 202 extending towards the first end mounting the light source 146.

Arranged within the housing body portion 202 so as to be in sliding contact with the cylindrical surface 218 is the optical lens 157, or an equivalent optical focusing system, to which there is attached a permanent magnet 222 through the intermediary of an external connecting bushing 224 so as to be movable in conjunction with the optical lens 157. The magnet 222 has a central through opening 226 to permit the passage therethrough of the light or laser beam projected from the light source 146 through the focusing lens 157 towards the end 210 of the housing body portion 202. The optical lens 157 and magnet 222 which is fastened thereto by means of the bushing 224 is readily axially slidable within the internal confines of the cylindrical housing body portion 202 along the wall surface 218 in view of the low coefficient of friction which is present therebetween.

The second end 210 of the housing body portion 202 having the smaller internal diameter bore 216 has an outer end section of the bore 216 provided with a screwthreading 228 which is adapted to be engaged by complementary screwthread on a bushing 230, which is constituted of a non-ferrous metal or plastic material, and which is adapted to be threaded into or out of the bore 216. The external end surface of the bushing 230 is closed off by means of a light-transparent plate-shaped window 232 which will permit the unhindered through-passage of light therethrough, but seal off the interior of the housing 200 from the environment.

The end surface or face 234 of the optical lens 157 facing towards the light source 146 is contacted by a helical coil spring 238 proximate the perimeter of the lens 157, and with the spring 240 extending towards the light source 146 into an annular channel 240 between a sleeve 242 extending along surface 218 and a section of the light source 146. The magnet 222 is contacted by a second helical coil spring 244 extending between the surface 246 facing away from the lens 157 about the aperture 226 and the facing end surface 248 of the bushing 230. Consequently, in view of the foregoing arrangement providing a counteraction by the oppositely acting spring forces of coil springs 238 and 244, in combination with an axial differential alignment of bushing 230 within threaded bore 216, the optical element 157 and the magnet 222 which is fastened thereto, are maintained at a predetermined initial or reference axial position within the body portion 202 of the housing 200. This position determines a basic or reference location for the beam waist of a light or laser beam projected from the light source 146 through the optical lens 157, optical aperture 226 in the magnet 222, and the window 234 for the scanning and reading of indicia on a target object. Inasmuch as the interior of the housing 200 is sealed off with respect to the environment or external conditions thereof, the air contained within the housing essentially provides a cushion acting as a shock-absorbent medium in the event that the scanning device is dropped or subjected to sudden external impacts. This will protect the delicate optical components contained therein from such damage caused by external forces.

The scanning device or reader 100 pursuant to the invention is employable as an essentially adjustable angle/zoom scanner which will enable the scanning and reading of indicia located at distances from the scanning device of within a few inches or even contact up to a number of feet; for example, working ranges of from about 5 in. up to 15 ft. without the need for extensive modifications and/or incorporating additional components in the scanning device. Thus, in order to shift the focal point or beam waist of the light or laser beam projected from the light source 146 through the focusing lens 157 and the optical aperture 226 in the magnet 222, the invention contemplates the electrical energizing of the coils 214 so as to alternatingly electromagnetically attract and repel the magnet 22 so as to resultingly axially reciprocate the arrangement consisting of the optical lens 157 and the magnet 222 with the aperture 226 within the confines of the tubular housing body portion 202 along the internal cylindrical wall surface 218 thereof. In order to effectuate the foregoing, an energizing alternating current is applied to the coils 214 through suitable electrical leads 250 which are connected to a source of such electrical power, possibly that supplying the light source 146, so as to impart an electromagnetic current of reversing polarity to the magnet 222. This reciprocatory movement of the lens 157 and magnet 222 within the body portion 202 of the housing 200 acts in opposition to the restoring or equilibrating forces of the coil springs 238 and 244 tending to return the optical lens 157 and magnet 222 to an initial equilibrium position at which the beam waist is at a predetermined range. In order to attain the desired working ranges, the extent of axial reciprocatory displacement of the arrangement consisting or the optical lens 157 and magnet 222 is approximately ± 15 mm from the equilibrium position; and the alternating current applied to the electromagnetic coils 214 is generally within an operating frequency of about 2 - 5 Hz, well below the normal scanning frequency of about 18 Hz for a typical scanning device of this type. Consequently, this will provide for a substantially automatic zooming action in a continuous mode (i.e., quasi-stationary movement) such that during a scanning operation the projected light or laser beam will be appropriately focused across the indicia being read by the scanning device, irrespective of the distance of the latter from the indicia.

Various modifications and structural changes of the above embodiment may be made without departing in any way from the invention. For example, movement of the condenser lens could be achieved using a small motor, a piezoelectric actuator, or a fluid-mechanical actuator.

DETAILED DESCRIPTION OF PREFERRED ADDITIONAL EMBODIMENTS

**The Laser Scanner System**

A block diagram of the laser scanner system 10' that incorporates the object sensing circuit 30' of the present invention is shown in Fig. 22. The scanner system 10', which is illustrative of the SL9000 laser scanner developed and manufactured by Symbol Technologies, Inc. of Bohemia, N.Y. 11716, the assignee of the present invention, is an omnidirectional laser scanner having two rotating motor/mirror assemblies that create a rosette type laser scan pattern 13' such as the one illustrated in Fig. 23 The number or lobes and rate of precession of the scan pattern are determined by the ratio of the two motor speeds. The laser light source (not shown) is a semiconductor laser diode that generates light having a wavelength of about 680 nm which is near the upper limit of the human eye response. Referring again to Figure 22, the laser diode control circuitry 18' and motor/mirror control circuitry 22' are controlled by microprocessor 24'. Laser scanning system 10' also provides an illumination source such as a light emitting diode for illuminating a portion of the rosette scan pattern 13'. The portion of the scan pattern being illuminated appears, in the preferred embodiment, as a bright, stationary spot 15' at the center of the rosette scanning pattern 13' (see Fig. 23). This illuminated spot functions to assist the user in introducing a bar code into the scan pattern when the visibility of the laser scan pattern becomes poor in normal ambient light conditions. Typical ambient light sources include overhead fluorescent and incandescent lamps and filtered sunlight. The light emitting diode will hereinafter be referred to as the AIM LED and the illuminated spot 15' as the AIM LED spot. In the preferred embodiment, the light generated by the AIM LED is focused by an optical convex mirror to form the AIM LED spot 15'. In other embodiments, focusing lenses may be used, or, a combination of optical lenses and mirrors. Since the AIM LED is pulsed, microprocessor 24' and AIM LED control circuitry 20' are used to control its duty cycle and frequency. The blinked AIM LED is used as the illumination source for the object sensor circuit 30' and its blinking rate is chosen to be in the pass band of the analog amplifiers/filters 14'. Note that the blinking rate is chosen to be much higher than the 120 Hz frequency of most ambient light sources.

The receiving optics of scanning system 10' are retroreflective with an optical field of view limited to a small area about the laser spot. Fig. 23 shows the field of view 17' following the laser spot about the rosette pattern 13' defining a scan field. The small field of view increases the system signal to noise ratio by making the system less sensitive to disturbing ambient light sources. As shown in Fig. 22, photodetector 12' and analog amplifier/filters 14' comprise a part of the light receiving circuitry. The analog amplifier/filter 14' pass band is such that it rejects any noise components at the lower ambient light frequencies. When the laser scanning system 10' is in the scanning mode, laser light is reflected off a bar code and is received by photodetector 12' and amplified and filtered by the analog amplifier/filter circuitry 14'. The resulting signal 21' is then digitized by hardware digitizer 16' and subsequently decoded by microprocessor 24' and a bar code decoder (not shown).

**Description of Scanning States**

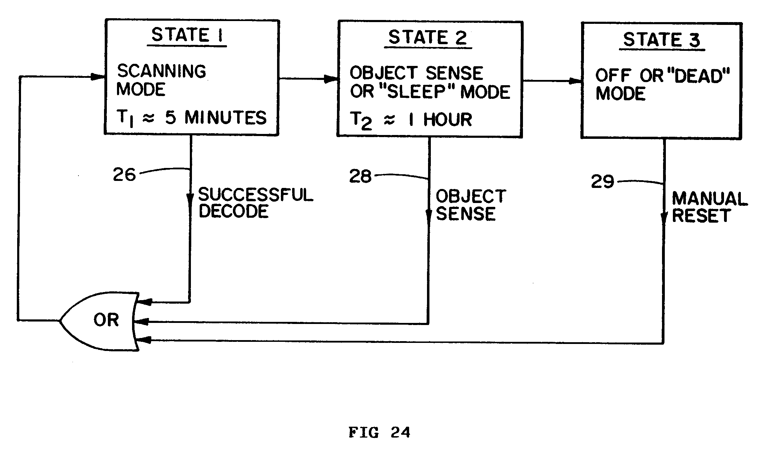

Laser scanning system 10' operates in three scanning states as illustrated in the diagram of Fig. 24 The scanning states or "modes" are depicted as boxes in Fig. 24. The use of the electronic "or" gate symbol in Fig. 24 is meant to convey that laser scanning system 10' can only operate in one mode at any given time.

In the continuous or scanning mode state, the scanner is completely on and ready to scan bar codes. The motors operate at full speed and the laser operates at full power. The AIM LED is continuously on and operates at 100% duty cycle in the preferred embodiment. A first timer implemented by microprocessor 24' functions to switch the scanner into the object sense or sleep mode if the scanner is unused for a period of time $T_1$. In a preferred embodiment $T_1$ is typically set to five minutes. If a bar code is successfully decoded while in the scanning mode state, a signal 26' is generated which directs the first timer to be reset. Thus the scanner will always remain in the scanning mode state when it is often being used (at least once every five minutes).

In the sleep mode, the laser diode is shut off and the motors operate at a fraction of their scanning speed while keeping the speed ratio constant. The AIM LED is blinked on and off at a frequency of about 20 KHz with a duty cycle of 50% in the preferred embodiment. Since the laser diode is off and the motors run at slower speeds, power consumption is reduced and the lifetime of these components is extended.

If a user tries to scan a bar code while in the sleep mode, the object sensor circuit 30' will detect that an object has been placed in the scan field. When a detection occurs, an object sensor trigger signal 28' is generated and used to direct the microprocessor to switch the laser scanning system back into the scanning mode. It should be mentioned that both object sensing and bar code decoding occur immediately after the object is introduced into the scan field. As will be explained in greater detail below, the object sensor circuit response time is quick enough so that the normal scanning process in not interrupted.

A second timer implemented by microprocessor 24' functions to switch the laser scanner into the OFF or dead mode if no object sensor trigger signal 28' occurs in a time period $T_2$. In the preferred embodiment, $T_2$ is typically set to one hour. In the OFF or dead mode, the microprocessor 24' is directed to turn off all laser scanning system components that have limited lifetimes or have greater power consumption, e.g., the laser diode, motors, AIM LED. In the preferred embodiment, some of the lower power consuming components, such as the photodetector 12', may remain on in the dead mode. Other components that have a long operational lifetime may be left on in the dead mode. The laser scanner 10' usually enters the dead mode only after extended periods of non-use (e.g., one hour or more). To start up the scanner again a manual reset switch (not shown) is pushed to generate a manual reset signal 29'. Manual reset signal 29' is coupled to microprocessor 24' which starts up the laser scanner system 10' in the scanning mode.

**Object Sensor Circuitry**

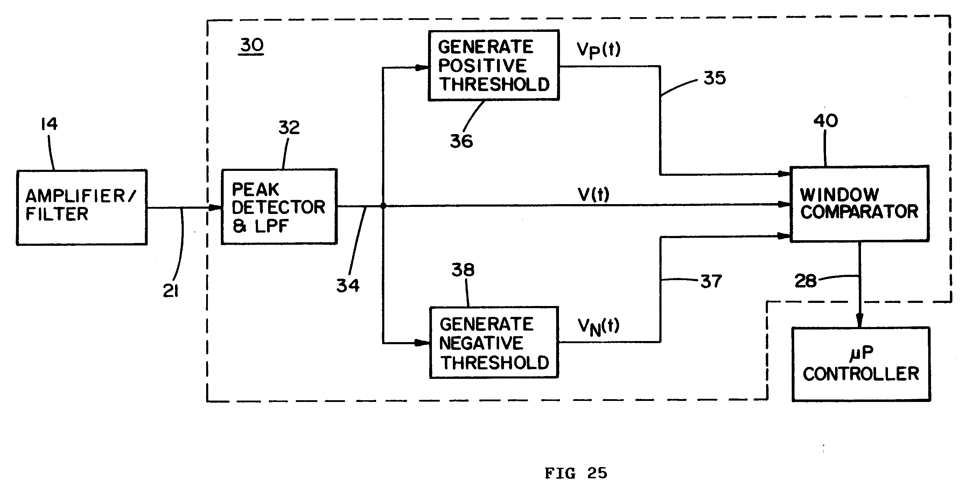

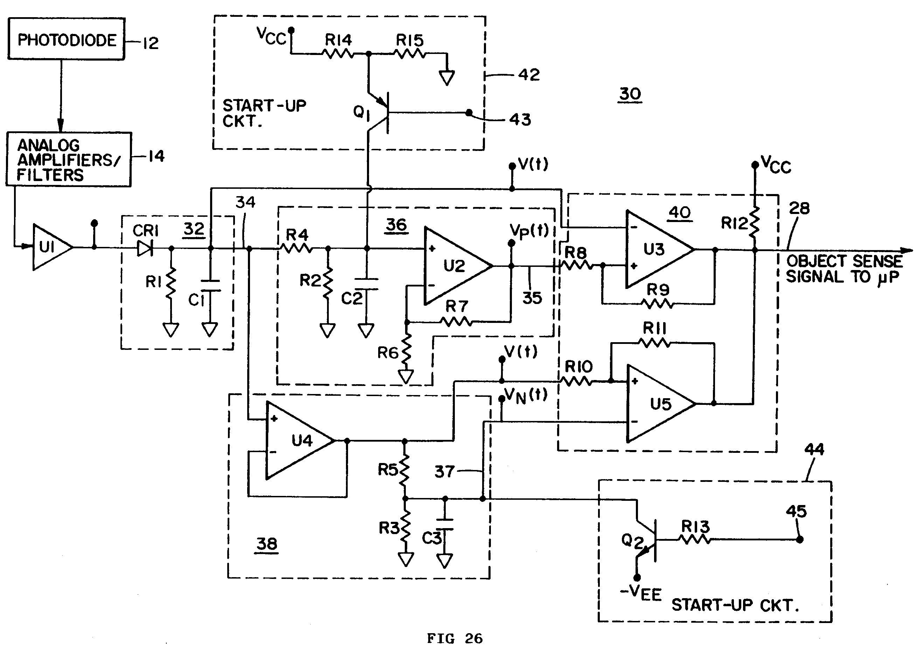

As previously mentioned, the requirement of the object sensing circuit 30' of the present invention is to detect when any object is introduced into the scanner field. This is accomplished by detecting a change in the received signal level of the reflected light from the pulsed AIM LED illumination source. The functional block diagram of object sensing circuit 30' shown in Fig. 25 and detailed circuit diagram of Fig. 26 illustrate how this is achieved.

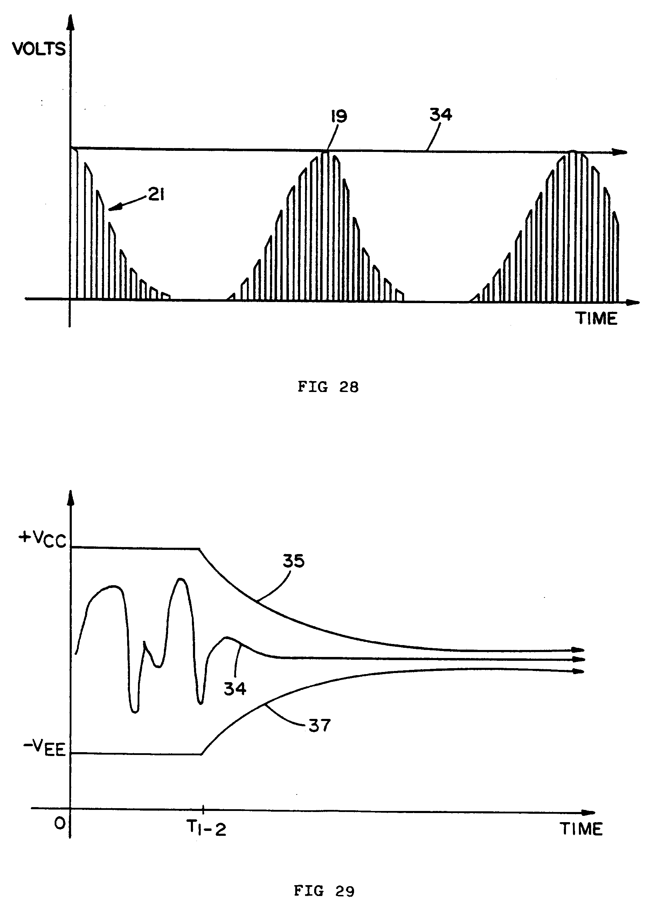

When the scanner system 10' is in the sleep mode, the bursts of pulses at the AIM LED blinking frequency are received by the photodetector 12' each time the field of view 17' passes through the stationary AIM LED spot 15'. The received signal is the periodic convolution of the moving field of view 17' with the stationary pulsed AIM LED spot 15'. After being received by the photodetector, the received signal is then amplified and filtered by amplifier/filter block 14' to obtain signal 21'. As can be seen from Fig. 28, the amplitude of signal 21' rises to a maximum when the field of view 17' overlaps the AIM LED spot 15'. In the preferred embodiment, the blinking frequency of the AIM LED is much greater than the spatial frequency of the field of view. Referring back to Fig. 26, amplifier U1 adds gain to properly scale the received signal 21'.

The received signal 21' is used to generate a steady state background signal 34' by passing signal 21' through the peak detector/low pass filter combination 32' comprising electronic components CR1, R1, and C1 in the preferred embodiment. The components of peak detector 32' are chosen so that its time constant is large thus keeping the ripple 19' of steady state signal 34' to a minimum as Figure 28 illustrates. Steady state background signal 34' is proportional to the strength of the light reflected off of a background surface in the laser scan field. A change in the background signal 34' will occur when an object is placed in the path of the AIM LED spot 15' or the scan field. This change in signal 34' is detected by object sensing circuit 30' in the manner described below:

A positive threshold signal 35' and negative threshold signal 37' are derived from the steady state background level, i.e., steady state signal 34'. The circuitry used to derive the positive threshold signal 35' is shown as block 36' in Figs. 25 and 26 and includes components R2, R4, C2, U2, R6, and R7. The values of the components are chosen so that the loading on the peak detector 32' is negligible and that the circuit time constant is greater than that of the peak detector/LPF combination 32'. This ensures that the positive threshold signal 35' has a slow charging time with respect to steady state background signal 34'. Thus, when steady state signal 34' changes in response to a detected object, the positive threshold voltage signal 35' derived therefrom does not instantaneously change. When operating in the sleep mode, the positive threshold signal 35' is about 5% greater in value than the steady state signal 34'.

The circuitry used to derive the negative threshold signal 37' is shown as block 38' in Figs. 25 and 26 and includes components U4, R5, R3, and C3. Amplifier U4 acts as a buffer to prevent loading of the peak detector 32'. The values of the components are chosen so that the circuit time constant is greater than that of the peak detector/LPF combination 32'. This ensures that the negative threshold signal 37' has a slow discharge time with respect to the steady state background signal 34'. Thus, when steady state signal 34' changes in response to a detected object, the negative threshold voltage signal 37' derived therefrom does not instantaneously change. When operating in the sleep mode, the negative threshold signal 37' value is about 5% less than that of steady state signal 34'. It should be mentioned that both positive and negative threshold signal magnitudes could be changed to suit a particular application. For example, it may be desirable to raise the threshold magnitudes in a noisy environment to thus eliminate false triggers due to the unwanted noise.

The steady state background signal 34' and positive and negative threshold signals 35' and 37' are input to a window comparator 40' consisting of comparators U3, U5, pull-up resistor R12 and resistor pairs R8, R9, and R10, R11 which are used to add hysteresis to the comparators U3 and U5, respectively. The output of window comparator 40', i.e., object sensor trigger signal 28', is normally at a high voltage (or a logic "1") in the sleep mode and drops to a low voltage (or a logic "φ") when an object is detected by object sensor circuit 30'.

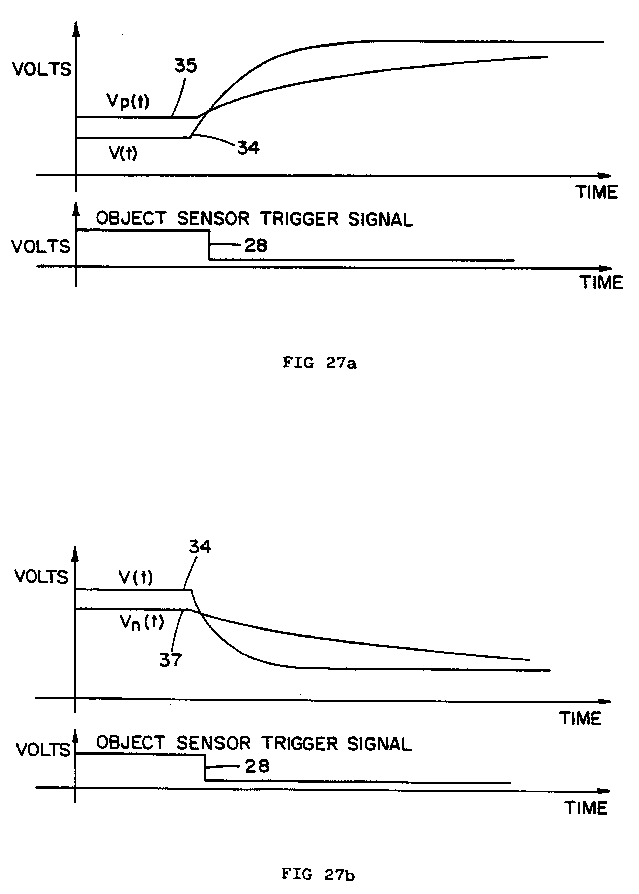

Typical detection waveforms are shown in Figures 27(a) and 27(b). Figure 27(a) shows the detection waveforms when an object with a reflectivity greater than that of the illuminated background surface is placed in the scan field of view 17'. As can be seen, the steady state background signal 34' increases above the positive threshold voltage signal 35'. At the point when the positive threshold is crossed, trigger signal 28' goes low. Figure 27(b) shows the detection waveforms when an object with a reflectivity less than that of the illuminated background surface is placed in the scan field 17'. As can be seen, the steady state background signal 34' decreases below the negative threshold voltage signal 37'. At the point when the negative threshold is crossed, trigger signal 28' goes low. Trigger signal 28' is sent to microprocessor 24' which detects the change, and instantaneously responds by switching the laser scanning system back to the scanning mode.

**Start-Up Circuits**

When the laser scanning system 10' is in the scanning mode, the laser is operating at full power In this mode, it is not generally possible to know what the amplitude or frequency content of the analog signal 21' representing the received reflected light will be. This is because they are dependent upon the background surface in scan field 17'. Therefore, there is a need to prevent the undesirable event of false triggering when laser scanner system 10' switches from scanning mode to sleep mode. To accomplish this, start-up circuits 42' and 44' as shown in Fig. 26, are connected at the positive and negative threshold generating circuits 36' and 38', respectively. These circuits function to prevent false object sensor triggering when the laser scanner system 10' switches from the scanning mode to the sleep mode after time period $T_1$. Start-up circuit 42' comprises transistor Q1 coupled to the positive voltage power supply line via voltage divider network comprising resistors R14 and R15. The positive voltage power supply line is labelled as $V_{cc}$ in Fig. 26 and is generally about +12.0 volts dc. When the scanner system 10' is in the scanning mode, a signal is present at terminal 43' of transistor Q1 that keeps Q1 turned on, so that the positive threshold voltage signal 35' is pinned at voltage $V_{cc}$. Upon switching from the scanning mode to sleep mode, the microprocessor sends a signal to the base terminal 43' of transistor Q1 which turns Q1 off. When this is done, the positive threshold voltage signal 35' discharges down to its sleep mode steady state level.

Similarly, start-up circuit 44' comprises transistor $Q_2$ coupled to the negative voltage power supply line

labelled $-V_{ee}$ in Fig. 26. The voltage at $-V_{ee}$ is generally about -12.0 volts dc. When the scanner system 10' is in the scanning mode, a signal is present at terminal 45' of transistor Q2 that keeps transistor Q2 turned on, so that the negative threshold voltage signal 37' is pinned at voltage $-V_{ee}$. Upon switching from the scanning mode to the sleep mode, the microprocessor sends a signal to the base terminal 45' of transistor Q2 which turns Q2 off. Once this is done, the negative threshold voltage signal 37' discharges to its sleep mode steady state level. Figure 29 illustrates the typical positive and negative threshold waveforms 35' and 37' as the scanner system switches from scanning mode to sleep mode. The time period labelled $T_{1-2}$ is the time at which the scanner system undergoes the transition from scanner mode to sleep mode.

Although the present invention has been described with respect to linear or single bar codes, it is not limited to such embodiments, but may also be applicable to more complex scanning patterns and to stacked or two-dimensional bar codes such as Code 49' and similar symbologies. It is conceivable that the method of the present invention may also find application for use with various machine vision applications in which information is derived from other types of indicia such as characters or from the surface characteristics of the article being scanned.

In all of the various embodiments, the elements of the scanner may be assembled into a very compact package that allows the scanner to be fabricated as a single printed circuit board of integral module. Such a module can interchangeably be used as the laser scanning element for a variety of different types of data acquisition systems. For example, the module may be alternately used in a hand-held scanner, a table top scanner attached to a flexible arm or mounting extending over the surface of the table or attached to the underside of the table top, or mounted as a subcomponent or subassembly or a more sophisticated data acquisition system.

The module would advantageously comprise a laser/optics subassembly mounted on a support, a scanning element such as a rotating or reciprocating mirror, and a photodetector component. Control or data lines associated with such components may be connected to an electrical connector mounted on the edge or external surface of the module to enable the module to be electrically connected to a mating connector associated with other elements of data acquisition system.

An individual module may have specific scanning or decoding characteristics associated with it, e.g. operability at a certain working distance, or operability with a specific symbology or printing density. The characteristics may also be defined through the manual setting of control switches associated with the module. The user may also adapt the data acquisition system to scan different types of articles or the system may be adapted for different applications by interchanging modules on the data acquisition system through the use of the simple electrical connector.

The scanning module described above may also be implemented within a self-contained data acquisition system including one or more such components as keyboard, display, data storage, application software, and data bases. Such a system may also include a communications interface to permit the data acquisition system to communicate with other components of a local area network or with the telephone exchange network, either through a modem or an ISDN interface, or by low power radio broadcast from the portable terminal to a stationary receiver.

It will be understood that each of the features described above, or two or more together, may find a useful application in other types of scanners and bar code readers differing from the types described above.

While the invention has been particularly shown and described with respect to preferred embodiments thereof, it will be understood by those skilled in the art that the foregoing and other changes in form and details may be made therein without departing from the scope of the invention, which should be limited only by the scope of the appended claims.

**Claims**

1. Apparatus for reading bar code symbols or the like on an object comprising:

   a. means for generating a first light beam, said light beam being directed over a scanning field of view, and for receiving reflected light from a background surface or object in said scanning field to produce electrical signals corresponding to the reflectivity of said background surface or object;
   b. means for processing said electrical signals during a first mode of operation to detect if an object is moved into or through said field of view; and
   c. control means responsive to the presence of an object in the field of view to generate a scanning second light beam during a second mode of operation to read a bar code symbol on a surface of such object, characterized in that said first light beam is pulsed at a first predetermined frequency in said first mode of operation and operated continuously in said second mode of operation.

2. Apparatus as defined in claim 1, wherein said means for generating a scanning second light beam includes a laser diode for generating a light beam and a mirror for deflecting the second light beam in a scanning pattern over a bar code symbol.

3. Apparatus as defined in claim 1 or 2, wherein said means for generating a first light beam is operated continuously when the means for generating a scanning light beam is producing a scanning second light beam.

4. Apparatus as defined in claim 1, 2 or 3, further comprising timing means for deactivating said means for generating a scanning light beam when no object has been introduced into the scan field of view for a predetermined period of time.

5. Apparatus as defined in claim 4, further comprising a second timing means for automatically switching said first light beam during a first mode of operation to an off-mode when no object has been placed in said field of view for a predetermined period of time.

6. Apparatus as defined in anyone of claims 1 to 5, wherein said means for processing said electrical signals includes means for detecting said background signal and the signal produced when an object is placed within the field of view and for producing an output signal indicative when such signals differ, and processor means responsive to said output signal for switching said first light beam from said first mode to said second mode of operation.

7. Apparatus according to anyone of claims 1 to 6, wherein the means for generating a first light beam includes a light emitting diode light source to produce the fist light beam.

8. Apparatus according to claim 1, further comprising scanning means which moves the laser beam along a first scan path in the reading mode.

9. A method for reading bar code symbols or the like on an object comprising the steps of:

   a. generating a first light beam, said beam being directed over a scanning field of view, and for receiving reflected light from a background surface or object in said scanning field to produce electrical signals corresponding to the reflectivity of said background surface or object;
   b. processing said electrical signals during a first mode of operation to detect if an object is moved into or through said field of view; and
   c. generating a scanning second light beam during a second mode of operation to read a bar code symbol on a surface of such object responsive to the presence of an object in the field of view; characterized in that said first light beam is pulsed at a first predetermined frequency in said first mode of operation and operated continuously in said second mode of operation.

**10.** A method as defined in claim 9, wherein said step of generating a scanning second light beam includes utilizing a laser diode for generating a light beam and a mirror for deflecting the second light beam in a scanning pattern over a barcode symbol.

**11.** A method as defined in claim 9 or 10, wherein said step of generating a first light beam includes operating said first light beam continuously while producing a scanning second light beam.

**12.** A method as defined in anyone of claims 9 to 11, further comprising the step of deactivating said scanning light beam when no object has been introduced into said scan filed of view after a predetermined period of time.

**13.** A method as defined in anyone of claims 9 to 12, further comprising the step of automatically switching said first light beam during a first mode of operation to an off-mode where no object has been placed in said field of view for a predetermined period of time.

**14.** A method as defined in anyone of claims 9 to 13, wherein said step of processing said electrical signals includes detecting said background signal and the signal produced when an object is placed within the field of view and for producing an output signal indicative when such signals differ, and switching said first light beam from said first mode to said second mode of operation in response to said output signal.

**15.** A method as defined in claim 14, wherein said step of generating a scanning second light beam is in response to said output signal.

**16.** A method as defined in anyone of claims 9 to 15, wherein the step of generating a first light beam includes generating and directing a first fixed light beam in a pulsing object sensor mode toward a field of view.

**Patentansprüche**

**1.** Vorrichtung zum Lesen von Strichcodesymbolen oder dergleichen auf Objekten bzw. Gegenständen, wobei die Vorrichtung folgendes aufweist:

a. Mittel zur Erzeugung eines ersten Lichtstrahls, wobei der Lichtstrahl über ein Abtast- bzw. ein Scannsichtfeld gelenkt wird, und zum Empfang von reflektiertem Licht von einer Hintergrundoberfläche oder einem Objekt im Abtastfeld, um elektrische Signale entsprechend der Reflektivität der Hintergrundoberfläche oder des Objekts zu erzeugen;

b. Mittel zur Verarbeitung der elektrischen Signale während eines ersten Betriebsmodus, um zu detektieren, ob ein Objekt in bzw. durch das Sichtfeld bewegt wird; und

c. Steuermittel, die ansprechend auf das Vorliegen eines Objekts im Sichtfeld sind, um einen abtastenden, zweiten Lichtstrahl während eines zweiten Betriebsmodus zu erzeugen, und zwar zum Lesen eines Strichcodesymbols auf einer Oberfläche eines solchen Objekts,
dadurch gekennzeichnet, daß der erste Lichtstrahl mit einer ersten, vorbestimmten Frequenz im ersten Betriebsmodus gepulst ist und während bzw. im zweiten Betriebsmodus kontinuierlich bzw. fortwährend betrieben wird.

**2.** Vorrichtung, wie in Anspruch 1 definiert, wobei die Mittel zur Erzeugung eines abtastenden, zweiten Lichtstrahls eine Laserdiode zur Erzeugung eines Lichtstrahls und einen Spiegel zur Ablenkung des zweiten Lichtstrahls in einem Abtastmuster über ein Strichcodesymbol aufweisen.

**3.** Vorrichtung, wie in Anspruch 1 oder 2 definiert, wobei die Mittel zur Erzeugung eines ersten Lichtstrahls kontinuierlich betrieben werden, wenn die Mittel zur Erzeugung eines abtastenden, zweiten Lichtstrahls einen abtastenden, zweiten Lichtstrahl erzeugen.

**4.** Vorrichtung, wie in den Ansprüchen 1, 2 oder 3 definiert, die ferner Zeitsteuermittel zur Deaktivierung der Mittel zur Erzeugung eines abtastenden Lichtstrahls aufweisen, und zwar dann, wenn kein Objekt in das Abtastsichtfeld für eine vorbestimmte Zeitdauer eingeführt wird.

**5.** Vorrichtung, wie in Anspruch 4 definiert, die ferner zweite Zeitsteuermittel aufweist, und zwar zum automatischen Schalten des ersten Lichtstrahls während eines ersten Betriebsmodus in einen Aus-Zustand bzw. Aus-Modus, wenn kein Objekt in das Sichtfeld für eine vorbestimmte Zeitdauer plaziert wurde.

**6.** Vorrichtung, wie in einem der Ansprüche 1 bis 5 definiert, wobei die Mittel zur Verarbeitung der elektrischen Signale Mittel zum Detektieren des Hintergrundsignals und des Signals umfassen, das erzeugt wird, wenn ein Objekt innerhalb des Sichtfeldes plaziert ist, und ferner zur Erzeugung eines Ausgangssignals anzeigend dafür, wenn solche Signale sich unterscheiden, und Prozessormittel ansprechend auf das Ausgangssignal zum Schalten des ersten Lichtstrahls vom ersten Modus zum zweiten Betriebsmodus.

**7.** Vorrichtung gemäß einem der Ansprüche 1 bis 6, wobei die Mittel zur Erzeugung eines ersten Lichtstrahls eine lichtemittierende Diodenlichtquelle zur Erzeugung des ersten Lichtstrahls aufweisen.

**8.** Vorrichtung gemäß Anspruch 1, die ferner Abtastmittel bzw. Scannmittel aufweist, die den Laserstrahl entlang einem ersten Scann- bzw. Abtastweg im Lesemodus bewegen.

**9.** Verfahren zum Lesen von Strichcodesymbolen oder dergleichen auf einem Objekt bzw. Gegenstand, wobei das Verfahren folgende Schritte aufweist:

a. Erzeugung eines ersten Lichtstrahls, wobei der Lichtstrahl über ein Abtastsichtfeld bzw. ein Scannsichtfeld gelenkt wird, und Empfang des reflektierten Lichts von einer Hintergrundoberfläche oder einem Objekt im Abtastfeld, um elektrische Signale entsprechend der Reflektivität der Hintergrundoberfläche oder des Objekts zu erzeugen;

b. Verarbeiten der elektrischen Signale während eines ersten Betriebsmodus, um zu detektieren, ob ein Objekt in bzw. durch das Sichtfeld bewegt wird; und

c. Erzeugung eines abtastenden, zweiten Lichtstrahls während eines zweiten Betriebsmodus, um ein Strichcodesymbol auf einer Oberfläche eines solchen Objekts zu lesen, und zwar ansprechend auf das Vorliegen eines Objekts im Sichtfeld;

dadurch gekennzeichnet, daß der erste Lichtstrahl mit einer ersten, vorbestimmten Frequenz im ersten Betriebsmodus gepulst ist und fortwährend bzw. kontinuierlich im zweiten Betriebsmodus betrieben wird.

**10.** Verfahren, wie in Anspruch 9 definiert, wobei der Schritt der Erzeugung eines abtastenden, zweiten Lichtstrahls die Verwendung einer Laserdiode zur Erzeugung eines Lichtstrahls und die Verwendung eines Spiegels zur Ablenkung des zweiten Lichtstrahls in einem Abtastmuster über ein Strichcodesymbol umfaßt.

**11.** Verfahren, wie in Anspruch 9 oder 10 definiert, wobei der Schritt des Erzeugens eines ersten Lichtstrahls den kontinuierlichen Betrieb des ersten Lichtstrahls umfaßt, während ein abtastender, zweiter Lichtstrahl erzeugt wird.

**12.** Verfahren, wie in einem der Ansprüche 9 bis 11 definiert, wobei das Verfahren ferner den Schritt der Deaktivierung des abtastenden Lichtstrahls aufweist, wenn kein Objekt in das Sichtfeld nach einer vorbestimmten Zeitdauer eingeführt wurde.

**13.** Verfahren, wie in einem der Ansprüche 9 bis 12 definiert, wobei das Verfahren ferner den Schritt des automatischen Schaltens des ersten Lichtstrahls während eines ersten Betriebsmodus in einen Aus-Modus aufweist, wenn kein Objekt in das Sichtfeld für eine vorbestimmte Zeitdauer plaziert wurde.

**14.** Verfahren, wie in einem der Ansprüche 9 bis 13 definiert, wobei der Schritt der Verarbeitung der elektrischen Signale die Detektion des Hintergrundsignals und des Signals umfaßt, das erzeugt wird, wenn ein Objekt in das Sichtfeld plaziert wird, und ferner die Erzeugung eines Ausgangssignals umfaßt, das anzeigend dafür ist, wenn sich solche Signale unterscheiden, und ferner das Schalten des ersten Lichtstrahls vom ersten Betriebsmodus zum zweiten Betriebsmodus ansprechend auf das Ausgangssignal.

**15.** Verfahren, wie in Anspruch 14 definiert, wobei der Schritt der Erzeugung eines abtastenden, zweiten Lichtstrahls ansprechend auf das Ausgangssignal ist.

**16.** Verfahren, wie in einem der Ansprüche 9 bis 15 definiert, wobei der Schritt der Erzeugung eines ersten Lichtstrahls die Erzeugung und die Lenkung eines ersten, festen Lichtstrahls in einen gepulsten Objektabfühlmodus bzw. Objektsensormodus in Richtung auf ein Sichtfeld umfaßt.

**Revendications**

**1.** Appareil pour lire des symboles de code à barres ou analogue sur un objet comprenant :

a. des moyens pour générer un premier faisceau lumineux, ledit faisceau lumineux étant dirigé sur un champ visuel de balayage, et pour recevoir la lumière réfléchie à partir d'une surface ou d'un objet d'arrière-plan dans ledit champ de balayage afin de produire des signaux électriques correspondant au pouvoir de réflexion de ladite surface ou dudit objet d'arrière-plan ;

b. des moyens pour traiter lesdits signaux électriques durant un premier mode opérationnel pour détecter si un objet est déplacé à l'intérieur ou à travers ledit champ visuel ; et

c. des moyens de commande sensibles à la présence d'un objet dans le champ visuel pour générer un second faisceau lumineux durant un second mode opérationnel pour lire un symbole de code à barres sur la surface d'un tel objet, caractérisé en ce que ledit premier faisceau lumineux est cadencé à une première fréquence prédéterminée dans ledit premier mode opérationnel et mis en oeuvre de manière continue dans ledit second mode opérationnel.

2. Appareil selon la revendication 1, dans lequel ledit moyen pour générer un second faisceau lumineux de balayage comporte une diode à laser pour générer un faisceau lumineux et un miroir pour dévier le second faisceau lumineux selon un schéma de balayage sur un symbole de code à barres.

3. Appareil selon la revendication 1 ou 2, dans lequel lesdits moyens pour générer un premier faisceau lumineux sont mis en oeuvre de manière continue lorsque les moyens pour générer un faisceau lumineux de balayage sont en train de produire un second faisceau lumineux de balayage.

4. Appareil selon l'une des revendications 1, 2 ou 3, comprenant de plus des moyens de synchronisation pour désactiver ledit moyen de génération d'un faisceau lumineux de balayage lorsqu'aucun objet n'a été introduit dans le champ visuel de balayage pendant une période prédéterminée de temps.

5. Appareil selon la revendication 4, comprenant de plus un second moyen de synchronisation pour commuter automatiquement ledit premier faisceau lumineux durant un premier mode opérationnel vers un mode désactivé lorsqu'aucun objet n'a été placé dans ledit champ visuel pendant une période de temps prédéterminée.

6. Appareil selon l'une quelconque des revendications 1 à 5, dans lequel lesdits moyens pour traiter lesdits signaux électriques comportent un moyen pour détecter ledit signal d'arrière-plan et le signal produit lorsqu'un objet est placé dans le champ visuel et pour produire un signal de sortie indiquant le moment où lesdits signaux diffèrent, et un moyen processeur sensible audit signal de sortie pour commuter ledit premier faisceau lumineux à partir du premier mode vers ledit second mode opérationnel.

7. Appareil selon l'une quelconque des revendications 1 à 6, dans lequel le moyen pour générer un premier faisceau lumineux comporte une source lumineuse à diode électroluminescente pour produire le premier faisceau lumineux.

8. Appareil selon la revendication 1, comprenant de plus un moyen de balayage qui déplace le faisceau laser le long d'un premier trajet de balayage dans le mode de lecture.

9. Méthode pour lire des symboles de code à barres ou analogue sur un objet comprenant les étapes consistant à :

    a. générer un premier faisceau lumineux, ledit faisceau étant dirigé sur un champ visuel de balayage, et pour recevoir la lumière réfléchie à partir d'une surface ou d'un objet d'arrière-plan dans ledit champ de balayage afin de produire des signaux électriques correspondant au pouvoir de réflexion lumineuse de ladite surface ou objet d'arrière-plan ;
    b. traiter lesdits signaux électriques durant un premier mode opérationnel pour détecter si un objet est déplacé à l'intérieur ou à travers ledit champ visuel ; et
    c. générer un second faisceau lumineux de balayage durant un second mode opérationnel pour lire un symbole de code à barres sur une surface d'un tel objet sensible à la présence d'un objet dans le champ visuel ;
    caractérisé en ce que ledit premier faisceau lumineux est cadencé à une première fréquence prédéterminée dans ledit premier mode opérationnel et mis en oeuvre de manière continue dans ledit second mode opérationnel.

10. Méthode selon la revendication 9, dans laquelle ladite étape de génération d'un second faisceau lumineux de balayage implique l'utilisation d'une diode laser pour générer un faisceau lumineux et un miroir pour dévier le second faisceau lumineux dans un schéma de balayage sur un symbole de code à barres.

11. Méthode selon l'une des revendications 9 ou 10, dans laquelle ladite étape de génération d'un premier faisceau lumineux implique la mise en oeuvre dudit premier faisceau lumineux de manière continue tout en produisant un second faisceau lumineux de balayage.

12. Méthode selon l'une quelconque des revendications 9 à 11, comprenant de plus l'étape consistant à désactiver ledit second faisceau lumineux de balayage lorsqu'aucun objet n'a été introduit dans ledit champ visuel de balayage après une période de temps prédéterminée.

13. Méthode selon l'une quelconque des revendications 9 à 12, comprenant de plus l'étape consistant à commuter automatiquement ledit premier faisceau lumineux durant un premier mode opérationnel vers un mode désactivé lorsqu'aucun objet n'a été introduit dans ledit champ visuel pendant une période de temps prédéterminée.

14. Méthode selon l'une quelconque des revendications 9 à 13, dans laquelle ladite étape de traitement desdits signaux électriques implique la détection dudit signal d'arrière-plan et du signal produit lorsqu'un objet est placé à l'intérieur du champ visuel et la production d'un signal de sortie indiquant le moment où lesdits signaux diffèrent, et la commutation dudit premier faisceau lumineux à partir dudit premier mode vers ledit second mode opérationnel en réponse audit signal de sortie.

**15.** Méthode selon la revendication 14, dans laquelle ladite étape de génération d'un second faisceau lumineux de balayage est mise en oeuvre en réponse audit signal de sortie.

**16.** Méthode selon l'une quelconque des revendications 9 à 15, dans laquelle l'étape de génération d'un premier faisceau lumineux implique la génération et l'orientation d'un premier faisceau lumineux fixe dans un mode de détection d'objets aléatoires vers un champ visuel.

LASER
LIGHT SOURCE
18

34
PHOTO
DETECTOR

*FIG. 2*

*FIG. 1*

FIG. 3B

FIG. 3A

FIG. 6

FIG. 4

FIG. 7

FIG. 5

FIG. 8

FIG. 9

FIG. 10

FIG. 11

FIG. 12

FIG. 13

SYNCHRONIZED

FIG. 14

FIG. 15

FIG. 17

## ADAPTIVE

Scan                                    Scan

Laser
Spot

Phase I:
Searching

Phase II: Decoding

Stationary Condenser

(Captured)

Movement of the
Condenser Lens

*FIG. 16*

$\dfrac{\ell_2}{\ell_{20}}$

—3.0

—2.0

—1.0

unstable
region

$\dfrac{\delta}{\Delta}$

*FIG. 18*

more power
dissipation

−1                    +1

*FIG. 19*

Laser
Light Source        52    f        20        Laser Waist

BEFORE
ZOOMING

$\ell_{10} = f + \Delta$                    $\ell_{20}$

$\delta$

Laser
Light Source        52    f        20        Laser
Waist

AFTER
ZOOMING

$\ell_1 = \ell_{10}$   $\delta$              $\ell_2$

FIG. 20

FIG. 21

FIG 22

FIG 23

STATE 1

SCANNING
MODE

$T_1 \approx 5$ MINUTES

STATE 2

OBJECT SENSE
OR "SLEEP" MODE

$T_2 \approx 1$ HOUR

STATE 3

OFF OR "DEAD"
MODE

26 —

SUCCESSFUL
DECODE

28 —

OBJECT
SENSE

29 —

MANUAL
RESET

OR

FIG 24

FIG 25

FIG 26

EP 0 548 958 B1

FIG 27a

FIG 27b

FIG 28

FIG 29